# EUROPEAN PATENT SPECIFICATION

(11) **EP 2 717 633 B1**
(45) Date of publication and mention of the grant of the patent: **11.04.2018**
(21) Application number: 11866705.4
(22) Date of filing: 17.08.2011
(51) Int. Cl.: H04W 52/16, H04W 52/28, H04W 52/14

(54) **SCHEDULING GRANT DETERMINATION METHOD AND USER EQUIPMENT**
VERFAHREN UND BENUTZERGERÄT ZUR BESTIMMUNG VON PLANUNGSGENEHMIGUNGEN
PROCÉDÉ DE DÉTERMINATION D'AUTORISATION DE PROGRAMMATION ET ÉQUIPEMENT D'UTILISATEUR ASSOCIÉ

(30) Priority: 30.05.2011 CN 201110142966
(43) Date of publication of application: 09.04.2014
(73) Proprietor: ZTE Corporation, Shenzhen, Guangdong 518057 (CN)
(72) Inventor: ZHANG, Haiyan, Shenzhen Guangdong 518057 (CN)
(74) Representative: Lavoix
(86) International application number: PCT/CN2011/078524
(87) International publication number: WO 2012/162950

(56) References cited:
- WO-A1-2011/039134
- CN-A- 101 640 557
- CN-A- 101 765 191
- CN-A- 101 959 246
- CN-A- 102 045 848
- "3rd Generation Partnership Project; Technical Specification Group Radio Access Network; Medium Access Control (MAC) protocol specification (Release 10)", 3GPP STANDARD; 3GPP TS 25.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 7 October 2010 (2010-10-07), pages 1-194, XP050461877,
- "3rd Generation Partnership Project; Technical Specification Group Radio Access Network; Physical layer procedures (FDD) (Release 10)", 3GPP STANDARD; 3GPP TS 25.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 29 March 2011 (2011-03-29), pages 1-100, XP050476515,
- "3rd Generation Partnership Project; Technical Specification Group Radio Access Network; Requirements for support of radio resource management (FDD) (Release 10)", 3GPP STANDARD; 3GPP TS 25.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 12 April 2011 (2011-04-12), pages 1-254, XP050477527,
- "3rd Generation Partnership Project; Technical Specification Group Radio Access Network; Spreading and modulation (FDD) (Release 10)", 3GPP STANDARD; 3GPP TS 25.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 2 October 2010 (2010-10-02), pages 1-39, XP050442449,
- "3rd Generation Partnership Project; Technical Specification Group Radio Access Network; Radio Resource Control (RRC); Protocol specification (Release 8)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.14.0, 28 March 2011 (2011-03-28), pages 1-1735, XP050476467,

## Description

### TECHNICAL FIELD

The disclosure relates to a High Speed Uplink Packet Access (HSUPA) system, and in particular to a User Equipment (UE) and method for determining Scheduling Grant (SG).

### BACKGROUND

In order to improve an uplink capacity and coverage of a system and satisfy a high speed uplink service requirement of a user, a 3GPP introduces, in R6, an Enhanced Dedicated Channel (E-DCH) in an uplink direction. Compared with an uplink Dedicated Channel (DCH) in R99/4/5, the E-DCH shifts a scheduling function from a Radio Network Controller (RNC) to a Node B (NodeB) so as to implement quick packet scheduling, and uses a Hybrid Automatic Repeat Request (HARQ) technique to implement quick re-transmission in a physical layer.

The document entitled "3rd Generation Partnership Project; Technical Specification Group Radio Access Network; Medium Access Control (MAC) protocol specification (Release 10)" discloses signaling of control information for FDD E-DCH, wherein DL Scheduling information including Serving Relative Grant and Non-serving Relative Grant. The document entitled "3rd Generation Partnership Project; Technical Specification Group Radio Access Network; Physical layer procedures (FDD) (Release 10)" discloses computation of gain factors of an E-TFC based on the signalled settings for its corresponding reference E-TFC. The document entitled "3rd Generation Partnership Project; Technical Specification Group Radio Access Network; Requirements for support of radio resource management (FDD) (Release 10)" discloses requirements for support of Radio Resource Management for FDD, and these requirements include requirements on measurements in UTRAN and the UE as well as requirements on node dynamical behaviour and interaction, in terms of delay and response characteristics. The document entitled "3rd Generation Partnership Project; Technical Specification Group Radio Access Network; Spreading and modulation (FDD) (Release 10)" describes spreading and modulation for UTRA Physical Layer FDD mode.

When scheduling, a NodeB allocates, according to available resources and an interference threshold of a cell, a scheduling request of a UE, a Quality of Service (QoS) demand and scheduling priority of a service and other factors, uplink resources to the UE by means of a certain scheduling algorithm. In the R6, a Binary Phase Shift Keying (BPSK) modulation mode is merely supported, and a maximum rate can reach 5.76 Mbps. In R7, a 16 Quadrature Amplitude Modulation (QAM) (i.e., 4PAM) modulation mode is introduced, and a maximum rate can reach 11.52 Mbps. After a dual carrier technique is introduced into R9, a maximum rate can reach 23.04 Mbps.

An E-DCH is borne by an E-DCH Dedicated Physical Data Channel (E-DPDCH), and zero, one or more E-DPDCHs may exist simultaneously. Accompanying control information of the E-DCH borne by an E-DCH Dedicated Physical Control Channel (E-DPCCH), the E-DPCCH will exist only when the E-DPDCH exists, and at most one E-DPCCH can merely exist.

The E-DCH may use multiple transmission format sets, wherein each transmission format set includes multiple transmission formats. A protocol gives a Transmission Block Index (TB Index) in each transmission format set and the bit number of corresponding Transmission Block Size (TB Size). A network may, when establishing an E-DCH channel, configure a used transmission format set to a UE, and the UE sends a transmission format selected from the transmission format set to a network side when sending data in each E-DCH Transport Time Interval (TTI), wherein the transmission format is identified by an E-DCH Transport Format Combination Indicator (E-TFCI).

A NodeB determines scheduling according to a scheduling request, and sends SG. A UE determines, according to SG information sent by the NodeB, the size of a data block that can be sent and a transmitting power thereof. At present, in a conventional method for determining SG (which is one adopted in a protocol), Table 1 or Table 2 (selected from TS25.213) is adopted to quantize a power gain factor *β_{ed}* of a respective E-DPDCH. Finally, the SG of the *i*th E-TFCI (marked as E-TFCl*ᵢ*) is obtained to be SG*ᵢ=*∑(*β_{ed,i,k}*)²*,* i.e., the sum of squares of the power gain factors *β_{ed}* of various E-DPDCHs, and k is a serial number of the E-DPDCH.

**Table 1**

| Signaling value of Δ_{E-DPCCH} | Quantized value of an amplitude ratio *A_{ed}*=*β_{ed}*/*β_{c}* | E-DPDCH modulation mode(s) used in identical sub-frames |
|---|---|---|
| 29 | 168/15 | BPSK |
| 28 | 150/15 | BPSK |
| 27 | 134/15 | BPSK |
| 26 | 119/15 | BPSK |
| 25 | 106/15 | BPSK |
| 24 | 95/15 | BPSK |
| 23 | 84/15 | BPSK |
| 22 | 75/15 | BPSK |
| 21 | 67/15 | BPSK |
| 20 | 60/15 | BPSK |
| 19 | 53/15 | BPSK, 4PAM |
| 18 | 47/15 | BPSK, 4PAM |
| 17 | 42/15 | BPSK, 4PAM |
| 16 | 38/15 | BPSK, 4PAM |
| 15 | 34/15 | BPSK, 4PAM |
| 14 | 30/15 | BPSK, 4PAM |
| 13 | 37/15 | BPSK, 4PAM |
| 12 | 24/15 | BPSK, 4PAM |
| 11 | 21/15 | BPSK, 4PAM |
| 10 | 19/15 | BPSK, 4PAM |
| 9 | 17/15 | BPSK |
| 8 | 15/15 | BPSK |
| 7 | 13/15 | BPSK |
| 6 | 12/15 | BPSK |
| 5 | 11/15 | BPSK |
| 4 | 9/15 | BPSK |
| 3 | 8/15 | BPSK |
| 2 | 7/15 | BPSK |
| 1 | 6/15 | BPSK |
| 0 | 5/15 | BPSK |

**Table 2**

| Signaling value of Δ_{E-DPCCH} | Quantized value of an amplitude ratio *A_{ed}*=*β_{ed}*/*β_{c}* | E-DPDCH modulation mode(s) used in identical sub-frames |
|---|---|---|
| 31 | 377/15 | 4PAM (only adapted to configuration of an SF2 code in 2×SF2+2×SF4) |
| 30 | 336/15 | 4PAM (only adapted to configuration of an SF2 code in 2×SF2+2×SF4) |
| 29 | 299/15 | 4PAM |
| 28 | 267/15 | BPSK (only adapted to configuration of an SF2 code in 2×SF2+2×SF4), 4PAM |
| 27 | 237/15 | BPSK (only adapted to configuration of an SF2 code in 2×SF2+2×SF4), 4PAM |
| 26 | 212/15 | BPSK, 4PAM |
| 25 | 189/15 | BPSK, 4PAM |
| 24 | 168/15 | BPSK, 4PAM |
| 23 | 150/15 | BPSK, 4PAM |
| 22 | 134/15 | BPSK, 4PAM |
| 21 | 119/15 | BPSK, 4PAM |
| 20 | 106/15 | BPSK, 4PAM |
| 19 | 95/15 | BPSK, 4PAM |
| 18 | 84/15 | BPSK, 4PAM |
| 17 | 75/15 | BPSK, 4PAM |
| 16 | 67/15 | BPSK, 4PAM |
| 15 | 60/15 | BPSK, 4PAM |
| 14 | 53/15 | BPSK, 4PAM |
| 13 | 47/15 | BPSK, 4PAM |
| 12 | 42/15 | BPSK, 4PAM |
| 11 | 38/15 | BPSK |
| 10 | 34/15 | BPSK |
| 9 | 30/15 | BPSK |
| 8 | 27/15 | BPSK |
| 7 | 24/15 | BPSK |
| 6 | 21/15 | BPSK |
| 5 | 19/15 | BPSK |
| 4 | 17/15 | BPSK |
| 3 | 15/15 | BPSK |
| 2 | 13/15 | BPSK |
| 1 | 11/15 | BPSK |
| 0 | 8/15 | BPSK |

Table 1 gives quantized values of Δ_{E-DPDCH} (i.e., *A_{ed}*) when E-TFCI≤E-TFCI boost. Table 2 gives quantized values of Δ_{E-DPDCH} when E-TFCI>E-TFCI boost, wherein *β_{c}* is a power gain factor of a DPCCH.

In order to send a larger E-TFCI, the E-TFCI boost is introduced to provide an enhanced phase reference for an E-DPCCH. The E-TFCI boost is configured to a NodeB and a UE by a RNC, and the NodeB and the UE are optional cells. Moreover, a protocol stipulates that an E-TFCI boost capability of a UE is optional, a UE with a 16QAM capability does not always have the E-TFCI boost capability, and a UE without the 16QAM capability may also have the E-TFCI boost capability.

Configuration combinations of the 16QAM capability and the E-TFCI boost capability of a UE are shown in Table 3.

**Table 3**

| Serial number of combination | Whether the UE is configured to use the 16QAM | Whether the UE is configured to use the E-TFCI boost | Maximum value of *A_{ed}* |
|---|---|---|---|
| 1 | Yes | Yes | 377/15 |
| 2 | Yes | No | 168/15 |
| 3 | No | Yes | 267/15 |
| 4 | No | No | 168/15 |

A power gain factor *β_{ed,i,k}* of an E-DPDCH is obtained by means of computation according to the number of physical channels and the size of a transmission block used by an E-TFCI*ᵢ*, the number of physical channels and the size of a transmission block used by a reference E-TFCI, a gain factor of the reference E-TFCI, a biasing Δ_{harq} of a Hybrid Automatic Repeat Request (HARQ) and other information. Computation of the unquantized value of the entire E-DPDCH is unrelated to the E-TFCI boost, only when a quantization table is used to perform quantization in the end, different quantization tables (i.e., the above-mentioned Table 1 and Table 2) are used respectively according to two cases that E-TFCI is greater than or less than E-TFCI boost.

Therefore, when a UE is configured to use the 16QAM, whether the E-TFCI boost is used, ranges of unquantized values of a power gain factors *β_{ed,i,k}* of E-DPDCHs should be same. However, according to an existing technique, ranges in quantization have a great difference: when the E-TFCI boost is not used, a maximum quantized value can only reach 168/15, whereas when the E-TFCI boost is used, a maximum quantized value can reach 377/15, so that a possibly reached maximum value of *A_{ed}* corresponding to the combination 2 in Table 3 is limited.

Similarly, when the 16QAM is not used, whether the E-TFCI boost is used, ranges of unquantized values of power gain factors *β*_{ed,i,k} of E-DPDCHs should be same. However, according to an existing technique, ranges in quantization have a great difference. For example, when the E-TFCI boost is not used, a maximum quantized value can only reach 168/15, whereas when the E-TFCI boost is used, a maximum quantized value can reach 267/15, so that a possibly reached maximum value of *A_{ed}* corresponding to the combination 4 in Table 3 is limited.

To sum up, an existing SG determination method cannot achieve a maximum rate of HSUPA in the modulation mode under the combinations 2 and 4, therefore a high speed characteristic of the HSUPA cannot be given full play.

### SUMMARY

In view of this, the disclosure is desired to provide a method and UE for determining SG, to solve the drawback that a UE cannot achieve a maximum rate under an existing method for determining SG in the related art.

To this end, a technical solution of the disclosure is implemented by the invention, which is defined by the appended independent claims. Dependent claims define embodiments of the invention. In the method and UE for determining SG of the disclosure, by means of improving Table 2 in the related art, Table 2 is modified to adapt to a case that a UE uses or does not use E-TFCI boost, and a new quantization table of Δ_{E-DPDCH} is generated. In this way, when a power gain factor of an E-DPDCH required by an E-TFCI is performed quantization, adoption of the new quantization table of Δ_{E-DPDCH} can make a maximum rate possibly achieved by a UE to be increased, so that a high-speed characteristic of HSUPA can be given more full play.

### BRIEF DESCRIPTION OF THE DRAWINGS

Fig. 1 is a schematic flowchart of a method for determining SG according to the disclosure; and
Fig. 2 is a schematic diagram of a structure of a UE for determining SG provided by the disclosure.

### DETAILED DESCRIPTION

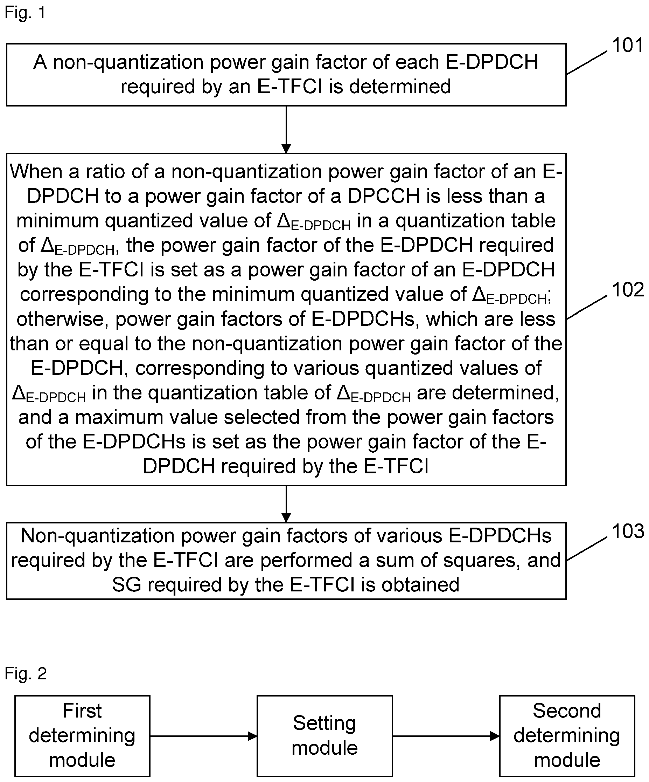

A method for determining SG according to the disclosure is shown in Fig. 1, and includes:
Step 101: A non-quantization power gain factor of each E-DPDCH required by an E-TFCI is determined.

A non-quantization power gain factor of an E-DPDCH required by a *i*th E-TFCI (i.e., E-TFCI*ᵢ*) is obtained by means of computation according to the number of physical channels and the size of a transmission block used by the E-TFCI*ᵢ*, the number of physical channels and the size of a transmission block used by a reference E-TFCI, a gain factor of the reference E-TFCI, a biasing Δ_{harq} (the Δ_{harq} is an HARQ offset configured by an MAC-d flow bearing the data) of an HARQ and other information. The computation is the conventional art, and is not repeated here.

In the disclosure, a non-quantization power gain factor of a single E-DPDCH is recorded as *β_{ed,k,i,uq}*, wherein *β_{ed}* represents a power gain factor of an E-DPDCH, *i* represents the *i*th E-TFCI, k is a serial number of an E-DPDCH, and *uq* represents unquantized.

Step 102: When a ratio of a non-quantization power gain factor of an E-DPDCH to a power gain factor of a DPCCH is less than a minimum quantized value of Δ_{E-DPDCH} in a quantization table of Δ_{E-DPDCH}, the power gain factor of the E-DPDCH required by the E-TFCI is set as a power gain factor of an E-DPDCH corresponding to the minimum quantized value of Δ_{E-DPDCH}; otherwise, power gain factors of E-DPDCHs, which are less than or equal to the non-quantization power gain factor of the E-DPDCH, corresponding to various quantized values of Δ_{E-DPDCH} in the quantization table of Δ_{E-DPDCH} are determined, and a maximum value selected from the power gain factors of the E-DPDCHs is set as the power gain factor of the E-DPDCH required by the E-TFCI.

Namely, when *β_{ed,k},_{i,uq}*/*β_{c}*<*A_{ed,min}*, *β_{ed}* corresponding to *A_{ed,min}* in the quantization table of Δ_{E-DPDCH} is set as *β_{ed,k}* required by the E-TFCI; and
when *β_{ed,k,i,uq}*/ *β_{c}*≥*A_{ed,min}*, *β_{ed}* corresponding to each *A_{ed}* in the quantization table of Δ_{E-DPDCH} is determined, and a maximum *β_{ed}* that satisfies *β_{ed}*≤*β_{ed,k,i,uq}* is set as *β_{ed,k}* required by the E-TFCI.

In the step, for selection of the quantization table of Δ_{E-DPDCH}, the following principle is followed:
a RNC notifies, according to a capability of a UE in supporting a new quantization table of Δ_{E-DPDCH}, the UE and a NodeB of a decision result that the UE uses or does not use the new quantization table of Δ_{E-DPDCH}. If the decision result is that the UE does not use the new quantization table of Δ_{E-DPDCH}, then Table 1 or Table 2 is selected to use (that is, Table 1 is used when E-TFCI≤E-TFCI boost, and Table 2 is used when E-TFCI>E-TFCI boost). If the decision result is that the UE uses the new quantization table of Δ_{E-DPDCH}, then the new quantization table of Δ_{E-DPDCH} (Table 4 as shown below) is selected to use.

Wherein, the new quantization table of Δ_{E-DPDCH} (Table 4) is an extension to Table 2, and the quantized values of Δ_{E-DPDCH} provided by Table 2 are modified as a case adapted to regardless of whether a UE uses the E-TFCI boost.

Step 103: Non-quantization power gain factors of various E-DPDCHs required by the E-TFCI are performed a sum of squares, and SG required by the E-TFCI is obtained.

Namely, SG=∑(*β_{ed,k}*)²*.*

**Table 4**

| Signaling value of Δ_{E-DPCCH} | Quantized value of an amplitude ratio Aed=βed/βc | E-DPDCH modulation mode(s) used in identical sub-frames |
|---|---|---|
| 31 | 377/15 | 4PAM (only adapted to configuration of an SF2 code in 2×SF2+2×SF4) |
| 30 | 336/15 | 4PAM (only adapted to configuration of an SF2 code in 2×SF2+2×SF4) |
| 29 | 299/15 | 4PAM |
| 28 | 267/15 | BPSK (only adapted to configuration of an SF2 code in 2×SF2+2×SF4), 4PAM |
| 27 | 237/15 | BPSK (only adapted to configuration of an SF2 code in 2×SF2+2×SF4), 4PAM |
| 26 | 212/15 | BPSK, 4PAM |
| 25 | 189/15 | BPSK, 4PAM |
| 24 | 168/15 | BPSK, 4PAM |
| 23 | 150/15 | BPSK, 4PAM |
| 22 | 134/15 | BPSK, 4PAM |
| 21 | 119/15 | BPSK, 4PAM |
| 20 | 106/15 | BPSK, 4PAM |
| 19 | 95/15 | BPSK, 4PAM |
| 18 | 84/15 | BPSK, 4PAM |
| 17 | 75/15 | BPSK, 4PAM |
| 16 | 67/15 | BPSK, 4PAM |
| 15 | 60/15 | BPSK, 4PAM |
| 14 | 53/15 | BPSK, 4PAM |
| 13 | 47/15 | BPSK, 4PAM |
| 12 | 42/15 | BPSK, 4PAM |
| 11 | 38/15 | BPSK |
| 10 | 34/15 | BPSK |
| 9 | 30/15 | BPSK |
| 8 | 27/15 | BPSK |
| 7 | 24/15 | BPSK |
| 6 | 21/15 | BPSK |
| 5 | 19/15 | BPSK |
| 4 | 17/15 | BPSK |
| 3 | 15/15 | BPSK |
| 2 | 13/15 | BPSK |
| 1 | 11/15 | BPSK |
| 0 | 8/15 | BPSK |

Table 4 gives quantized values of Δ_{E-DPDCH} when a UE uses or does not use the E-TFCI boost.

The solution of the disclosure is illustrated below by means of specific embodiments.

### Embodiment 1

Step 1: The method for determining SG of the disclosure is introduced into 3GPP Rel 10, that is, when a version of a UE is Rel 10, it is indicated that the UE supports the new quantization table of Δ_{E-DPDCH}. Of course, the method for determining SG of the disclosure may also be introduced into other versions as needed, but is not limited to the 3GPP Rel 10.

A UE reports its own version information to a RNC, and the RNC can learn a capability of the UE in supporting the new quantization table of Δ_{E-DPDCH} according to the version information.

Step 2: The RNC decides that the UE uses the new quantization table of Δ_{E-DPDCH}, decides that the UE uses 16QAM instead of using E-TFCI boost, and notifies a NodeB of the configuration information. More preferably, the RNC notifies, via a newly-added cell on an lub interface, the NodeB of a decision result that the UE uses the new quantization table of Δ_{E-DPDCH}; and notifies, via a newly-added dedicated cell on a Uu interface, the UE of the decision result that the UE use the new quantization table of Δ_{E-DPDCH}. The above newly-added cells are optional cells, when the optional cells are not included, it is indicated that the UE does not use the new quantization table of Δ_{E-DPDCH}; otherwise, it is indicated that the UE uses the new quantization table of Δ_{E-DPDCH}. A corresponding decision result of using or no using the new quantization table of Δ_{E-DPDCH} by the UE is notified to the UE and the NodeB by means of values of the newly-added cells.

Step 3: The UE sends uplink scheduling information to the NodeB.

Step 4: After receiving the uplink scheduling information from the UE, the NodeB performs scheduling on the UE according to services requirements of various UEs in a cell, unlink interference degree of the cell, a load threshold allowed by a network, a load processed by the NodeB and other factors, and obtains a power offset PO_{m,ed} of an E-DPDCH of the UE with respect to a DPCCH by means of computation, wherein the letter m is a serial number of the UE; and converts SG of the UE into a corresponding serial number (i.e., Absolute Grant (AG)) in a SG table or Relative Grant (RG) with respect to "UP", "DOWN" or "HOLD" of SG during the previous scheduling according to the SG table. The implementation of converting the SG into the AG or the RG is the conventional art, and is not repeated here.

Step 5: The NodeB sends the AG or the RG converted by the SG to the UE.

Step 6: The UE converts the received AG or RG into a corresponding quantized value of SG.

Specifically, Table 5 and Table 6 correspond to quantization tables of SG when Table 1 and Table 2 are used respectively. When the new quantization table of Δ_{E-DPDCH} is used, Table 6 serves as a corresponding quantization table of SG.

After the UE receives the AG (a value range of the AG is 0 to 37), the UE finds a corresponding physical value such as AG = 37 in the quantization table of SG. In the embodiment, the UE uses the new quantization table of Δ_{E-DPDCH}, a corresponding quantization table of SG when Table 6 is used is (377/15)²x4.

After the UE receives the RG, the UE finds and stores, according to a power offset PO_{m,ed} (a value range of the PO_{m,ed}AG is 0 to 37) of the E-DPDCH used when selecting an E-TFC within a previous TTI with respect to a DPCCH, a corresponding quantized value of SG in the quantization table of SG, and takes the corresponding quantization value as a reference such as PO_{m,ed} = 36. In the embodiment, the UE uses the new quantization table of Δ_{E-DPDCH}, and then a corresponding quantization table of SG when Table 6 is used is (336/15)²x4. The UE finds a quantized value of SG corresponding to "UP", "DOWN" or "HOLD" in the quantization table of SG respectively on the basis of the reference according to an "UP", "DOWN" or "HOLD" command in RG, for example, the "UP" command exists in the RG, and then the quantized value of SG corresponding to the "UP" is (377/15)²x4.

**Table 5**

| Index | Scheduled Grant |
|---|---|
| 37 | (168/15)²×6 |
| 36 | (150/15)²×6 |
| 35 | (168/15)²×4 |
| 34 | (150/15)²×4 |
| 33 | (134/15)²×4 |
| 32 | (119/15)²×4 |
| 31 | (150/15)²×2 |
| 30 | (95/15)²×4 |
| 29 | (168/15)² |
| 28 | (150/15)² |
| 27 | (134/15)² |
| 26 | (119/15)² |
| 25 | (106/15)² |
| 24 | (95/15)² |
| 23 | (84/15)² |
| 22 | (75/15)² |
| 21 | (67/15)² |
| 20 | (60/15)² |
| 19 | (53/15)² |
| 18 | (47/15)² |
| 17 | (42/15)² |
| 16 | (38/15)² |
| 15 | (34/15)² |
| 14 | (30/15)² |
| 13 | (27/15)² |
| 12 | (24/15)² |
| 11 | (21/15)² |
| 10 | (19/15)² |
| 9 | (17/15)² |
| 8 | (15/15)² |
| 7 | (13/15)² |
| 6 | (12/15)² |
| 5 | (11/15)² |
| 4 | (9/15)² |
| 3 | (8/15)² |
| 2 | (7/15)² |
| 1 | (6/15)² |
| 0 | (5/15)² |

**Table 6**

| Index | Scheduled Grant |
|---|---|
| 37 | (377/15)²×4 |
| 36 | (336/15)²×4 |
| 35 | (237/15)²×6 |
| 34 | (212/15)²×6 |
| 33 | (237/15)²×4 |
| 32 | (168/15)²×6 |
| 31 | (150/15)²×6 |
| 30 | (168/15)²×4 |
| 29 | (150/15)²×4 |
| 28 | (134/15)²×4 |
| 27 | (119/15)²×4 |
| 26 | (150/15)²×2 |
| 25 | (95/15)²×4 |
| 24 | (168/15)² |
| 23 | (150/15)² |
| 22 | (134/15)² |
| 21 | (119/15)² |
| 20 | (106/15)² |
| 19 | (95/15)² |
| 18 | (84/15)² |
| 17 | (75/15)² |
| 16 | (67/15)² |
| 15 | (60/15)² |
| 14 | (53/15)² |
| 13 | (47/15)² |
| 12 | (42/15)² |
| 11 | (38/15)² |
| 10 | (34/15)² |
| 9 | (30/15)² |
| 8 | (27/15)² |
| 7 | (24/15)² |
| 6 | (21/15)² |
| 5 | (19/15)² |
| 4 | (17/15)² |
| 3 | (15/15)² |
| 2 | (13/15)² |
| 1 | (12/15)² |
| 0 | (11/15)² |

The quantized value of SG is SG allocated by the NodeB to the UE. When sending a data block actually, the UE must satisfy that SG required by the sent transmission block cannot exceed the SG allocated by the NodeB.

Step 7: Determining the required SG for the transmission block sent by the UE is specifically:
assuming that an E-TFCI corresponding to a size of the transmission block is an E-TFCI*ᵢ*,
firstly, a non-quantization power gain factor *β_{ed,k,i,uq}* of the *k*th E-DPDCH required by the E-TFCI*ᵢ* is determined (specific implementation thereof is the conventional art, and is not repeated here);
next, the *β_{ed,k,i,uq}* is performed the following quantization: when *β_{ed,k,i,uq}*/*β_{c}*<*A_{ed,min}*, wherein *A_{ed,min}* in Table 4 is 8/15, then *β_{ed,k}* required by the E-TFCI*ᵢ* is 8;
when *β_{ed,k,i,uq}*/*β_{c}*≥*A_{ed,min}, β_{ed}* corresponding to each *A_{ed}* in Table 4 is determined, and a maximum value *β_{ed}* satisfying *β_{ed}*≤*β_{ed,k,i,uq}* is set as the *β_{ed,k}* required by the E-TFCI. Assuming that *β_{ed,k,i,uq}*=20*,* the value of *β_{ed}* satisfying *β_{ed}*≤*β_{ed,k,i,uq}* in Table 4 is 19, 17, 15, 13, 11 and 8, in which the maximum value is 19, therefore *β_{ed,k}*=19.

By analogy, power gain factors of all E-DPDCHs required by the E-TFCI*ᵢ* are obtained, and then all *β_{ed,k}* are performed the sum of squares to obtain SG required by the E-TFCI*ᵢ*, i.e., SG=∑(*β_{ed,k}*)².

It needs to be indicated that if SG determined by the UE exceeds SG allocated by a NodeB, then a transmission block is sent by means of the SG allocated by the NodeB; otherwise, the UE sends a transmission block by means of the SG determined by the UE itself.

In the embodiment, since the UE is configured to use the 16QAM instead of using the E-TFCI boost, it can seen from Table 4 that a maximum quantized value of Δ_{E-DPDCH} can reach 377/15, whereas the conventional art can only reach 168/15, so that a maximum rate possibly achieved by the UE is increased and a high-speed characteristic of HSUPA can be given more full play.

### Embodiment 2

The embodiment is basically the same as Embodiment 1, and differs from Embodiment 1 in that: in Step 2, the RNC decides that the UE uses the new quantization table of Δ_{E-DPDCH}, and decides that the UE doses not use the 16QAM or E-TFCI boost.

In the embodiment, since the UE is configured to not use the 16QAM or the E-TFCI boost, it can seen from Table 4 that a maximum quantized value of Δ_{E-DPDCH} can reach 267/15, whereas the conventional art can only reach 168/15, so that a maximum rate possibly achieved by the UE is increased and a high-speed characteristic of HSUPA can be given more full play.

### Embodiment 3

The embodiment is basically the same as Embodiment 1, and differs from Embodiment 1 in that: in Step 2, the RNC decides that the UE does not use the new quantization table of Δ_{E-DPDCH}, decides that the UE use the 16QAM instead of using the E-TFCI boost, and notifies a NodeB of the configuration information.

In the embodiment, since the RNC decides that the UE does not use the new quantization table of Δ_{E-DPDCH} (i.e., Table 4), and decides that the UE use the 16QAM instead of using the E-TFCI boost, which corresponds to E-TFCI boost = 0, the UE uses Table 1 (i.e., a case that E-TFCI≤E-TFCI boost).

Then, a process of determining SG is the same as Step 7 in Embodiment 1, and differs from Step 7 in Embodiment 1 in referring to Table 1 instead of Table 4.

### Embodiment 4

The embodiment is basically the same as Embodiment 1, and differs from Embodiment 1 in that: the version of the UE is Rel 8, that is, the UE does not support the new quantization table of Δ_{E-DPDCH}, then the RNC decides that the UE does not use the new quantization table of Δ_{E-DPDCH}; when the RNC decides that the UE uses the 16QAM and E-TFCI boost, the UE uses Table 1 or Table 2 respectively according to E-TFCI≤E-TFCI boost or E-TFCI>E-TFCI boost.

Then, a process of determining SG is the same as Step 7 in Embodiment 1, and differs from Step 7 in Embodiment 1 in referring to Table 1 or Table 2 instead of Table 4.

It needs to be indicated that the RNC may also learn a capability of the UE in supporting the new quantization table of Δ_{E-DPDCH} by means of the following way: a cell is newly added into a RRC connection request message, and the UE notifies the RNC of the capability of the UE in supporting the new quantization table of Δ_{E-DPDCH} via the cell, when the RRC connection request message includes the cell, it is indicated that the UE supports the new quantization table of Δ_{E-DPDCH}; otherwise, the UE does not support the new quantization table of Δ_{E-DPDCH}.

In order to implement the above-mentioned method, the disclosure provides a UE as shown in Fig. 2.

A UE for determining SG includes:
a first determining module configured to determine a non-quantization power gain factor of an E-DPDCH required by an E-TFCI;
a setting module configured, when a ratio of the non-quantization power gain factor of the E-DPDCH to a power gain factor of a DPCCH is less than a minimum quantized value of Δ_{E-DPDCH} in a quantization table of Δ_{E-DPDCH}, to set the non-quantization power gain factor of the E-DPDCH required by the E-TFCI as a power gain factor of an E-DPDCH corresponding to the minimum quantized value of Δ_{E-DPDCH}; otherwise, to determine power gain factors of E-DPDCHs, which are less than or equal to the non-quantization power gain factor of the E-DPDCH, corresponding to various quantized values of Δ_{E-DPDCH} in the quantization table of Δ_{E-DPDCH}, and to set a maximum value selected from the power gain factors of the E-DPDCHs as the power gain factor of the E-DPDCH required by the E-TFCI; and
a second determining module configured to perform a sum of squares on non-quantization power gain factors of various E-DPDCHs required by the E-TFCI, and to obtain SG required by the E-TFCI.

Wherein, the setting module is further configured, when a UE does not use a new quantization table of Δ_{E-DPDCH}, to select a quantization table of Δ_{E-DPDCH} when E-TFCI≤E-TFCI boost or a quantization table of Δ_{E-DPDCH} when E-TFCI>E-TFCI boost; otherwise, to select the new quantization table of Δ_{E-DPDCH}.

The setting module is further configured to expand the quantization table of Δ_{E-DPDCH} when E-TFCI>E-TFCI boost as adaptation to a case that a UE uses or does not use E-TFCI boost, and to generate the new quantization table of Δ_{E-DPDCH}. It needs to be indicated that the function may also preferably implemented by a dedicated management module in an HSUPA system.

### Industrial Applicability

In the method and UE for determining SG of the disclosure, by means of improving Table 2 in the related art, Table 2 is modified to adapt to a case that a UE uses or does not use E-TFCI boost, and a new quantization table of Δ_{E-DPDCH} is generated. In this way, when a power gain factor of an E-DPDCH required by an E-TFCI is performed quantization, adoption of the new quantization table of Δ_{E-DPDCH} can make a maximum rate possibly achieved by a UE to be increased, so that a high-speed characteristic of HSUPA can be given more full play.

The above are only preferable embodiments of the disclosure, but are not intended to limit the scope of protection of the disclosure.

## Claims

1. A method for determining Scheduling Grant (SG), comprising:
determining (101), by a User Equipment (UE), a non-quantization power gain factor of an Enhanced Dedicated Channel (E-DCH) Dedicated Physical Data Channel (E-DPDCH) required by an E-DCH Transport Format Combination Indicator (E-TFCI);
generating, by the UE, a new quantization table of Δ_{E-DPDCH} by expanding a quantization table of Δ_{E-DPDCH} when E-TFCI>E-TFCI boost as adaptation to a case that the UE uses or does not use the E-TFCI boost;
selecting, by the UE, a quantization table of Δ_{E-DPDCH} when E-TFCI≤E-TFCI boost or the quantization table of Δ_{E-DPDCH} when E-TFCI>E-TFCI boost when it is determined the UE does not use the new quantization table of Δ_{E-DPDCH} according to a capability of the UE; or, selecting, by the UE, the new quantization table of Δ_{E-DPDCH} when it is determined the UE uses the new quantization table of Δ_{E-DPDCH} according to a capability of the UE;
when a ratio of the non-quantization power gain factor of the E-DPDCH to a power gain factor of a Dedicated Physical Control Channel (DPCCH) is less than a minimum quantized value of Δ_{E-DPDCH} in a selected quantization table of Δ_{E-DPDCH}, setting (102) the quantization power gain factor of the E-DPDCH required by the E-TFCI as a power gain factor of an E-DPDCH corresponding to the minimum quantized value of Δ_{E-DPDCH}; otherwise, determining power gain factors of E-DPDCHs corresponding to various quantized values of Δ_{E-DPDCH} in the selected quantization table of Δ_{E-DPDCH}, determining power gain factors being less than or equal to the non-quantization power gain factor of the E-DPDCH, selecting (102) a maximum value from the power gain factors less than or equal to the non-quantization power gain factor of the E-DPDCH, and setting (102) the maximum value as the quantization power gain factor of the E-DPDCH required by the E-TFCI; and
performing (103), by the UE, a sum of squares on quantization power gain factors of various E-DPDCHs required by the E-TFCI, and obtaining SG required by the E-TFCI which is equal to the sum of squares on power gain factors of various E-DPDCHs required by the E-TFCI.

2. The method for determining SG according to claim 1, wherein the step of deciding that the UE uses or does not use a new quantization table of Δ_{E-DPDCH} comprises:
notifying, by a Radio Network Controller (RNC), according to a capability of the UE in supporting the new quantization table of Δ_{E-DPDCH}, the UE and a Node B (NodeB) of a decision result that the UE uses or does not use the new quantization table of Δ_{E-DPDCH}.

3. The method for determining SG according to claim 2, wherein the step of determining, by the RNC, the capability of the UE in supporting the new quantization table of Δ_{E-DPDCH} comprises:
reporting, by the UE, its own version information to the RNC, and learning, by the RNC, the capability of the UE in supporting the new quantization table of Δ_{E-DPDCH} according to the version information; or
newly adding a cell into a Radio Resource Control (RRC) connection request message, and notifying, by the UE, the RNC of the capability of the UE in supporting the new quantization table of Δ_{E-DPDCH} via the cell.

4. The method for determining SG according to clam 2, wherein the step of notifying the UE and a NodeB of a decision result that the UE uses or does not use the new quantization table of Δ_{E-DPDCH} comprises:
notifying, by the RNC, via a newly-added dedicated cell on a Uu interface, the UE of a decision result that the UE uses or does not use the new quantization table of Δ_{E-DPDCH}; and
notifying, by the RNC, via a newly-added dedicated cell on an lub interface, the NodeB of the decision result that the UE uses or does not use the new quantization table of Δ_{E-DPDCH}.

5. A User Equipment (UE) for determining Scheduling Grant (SG), comprising:
a first determining module configured to determine (101) a non-quantization power gain factor of an Enhanced Dedicated Channel (E-DCH) Dedicated Physical Data Channel (E-DPDCH) required by an E-DCH Transport Format Combination Indicator (E-TFCI);
a setting module configured, to generate a new quantization table of Δ_{E-DPDCH} by expanding a quantization table of Δ_{E-DPDCH} when E-TFCI>E-TFCI boost as adaptation to a case that a UE uses or does not use the E-TFCI boost; to select a quantization table of Δ_{E-DPDCH} when E-TFCI≤E-TFCI boost or the quantization table of Δ_{E-DPDCH} when E-TFCI>E-TFCI boost when it is determined the UE does not use the new quantization table of Δ_{E-DPDCH}; or, to select the new quantization table of Δ_{E-DPDCH} when it is determined the UE uses the new quantization table of Δ_{E-DPDCH}; when a ratio of the non-quantization power gain factor of the E-DPDCH to a power gain factor of a Dedicated Physical Control Channel (DPCCH) is less than a minimum quantized value of Δ_{E-DPDCH} in a selected quantization table of Δ_{E-DPDCH}, to set (102) the non-quantization power gain factor of the E-DPDCH required by the E-TFCI as a power gain factor of an E-DPDCH corresponding to the minimum quantized value of Δ_{E-DPDCH}; otherwise, to determine power gain factors of E-DPDCHs, corresponding to various quantized values of Δ_{E-DPDCH} in the selected quantization table of Δ_{E-DPDCH}, to determine power gain factors being less than or equal to the non-quantization power gain factor of the E-DPDCH, to select (102) a maximum value from the power gain factors being less than or equal to the non-quantization power gain factor of the E-DPDCH, and to set (102) the maximum value as the quantization power gain factor of the E-DPDCH required by the E-TFCI; and
a second determining module configured to perform (103) a sum of squares on quantization power gain factors of various E-DPDCHs required by the E-TFCI, and to obtain SG required by the E-TFCI which is equal to the sum of squares on power gain factors of various E-DPDCHs required by the E-TFCI.

## Patentansprüche

1. Verfahren zum Bestimmen einer Planungsgenehmigung (SG), das umfasst:
Bestimmen (101) eines Nicht-Quantisierungsleistungsverstärkungsfaktors eines Enhanced Dedicated Channel (E-DCH) Dedicated Physical Data Channel (E-DPDCH) durch ein Benutzergerät (UE), der durch einen E-DCH Transport Format Combination Indicator (E-TFCI) erforderlich ist;
Erstellen einer neuen Quantisierungstabelle von Δ_{E-DPDCH} durch das UE durch Erweitern einer Quantisierungstabelle von Δ_{E-DPDCH}, wenn E-TFCI > E-TFCI-Boost, um eine Anpassung in einem Fall vorzunehmen, in dem das UE den E-TFCI-Boost verwendet oder nicht;
Auswählen einer Quantisierungstabelle von Δ_{E-DPDCH} durch das UE, wenn E-TFCI ≤ E-TFCI-Boost, oder der Quantisierungstabelle von Δ_{E-DPDCH}, wenn E-TFCI > E-TFCI-Boost, durch das UE, wenn bestimmt wird, dass das UE die neue Quantisierungstabelle von Δ_{E-DPDCH} gemäß einer Fähigkeit des UE nicht verwendet; oder Auswählen der neuen Quantisierungstabelle von Δ_{E-DPDCH} durch das UE, wenn bestimmt wird, dass das UE die neue Quantisierungstabelle von Δ_{E-DPDCH} gemäß einer Fähigkeit des UE verwendet;
wenn ein Verhältnis des Nicht-Quantisierungsleistungsverstärkungsfaktors des E-DPDCH zu einem Leistungsverstärkungsfaktor eines Dedicated Physical Control Channel (DPCCH) kleiner als ein quantisierter Mindestwert von Δ_{E-DPDCH} in einer ausgewählten Quantisierungstabelle von Δ_{E-DPDCH} ist, Einstellen (102) des Quantisierungsleistungsverstärkungsfaktors des E-DPDCH, der durch den E-TFCI erforderlich ist, als Leistungsverstärkungsfaktor eines E-DPDCH, der dem quantisierten Mindestwert von Δ_{E-DPDCH} entspricht; andernfalls Bestimmen von Leistungsverstärkungsfaktoren von E-DPDCHs, die diversen quantisierten Werten von Δ_{E-DPDCH} in der ausgewählten Quantisierungstabelle von Δ_{E-DPDCH} entsprechen, Bestimmen von Leistungsverstärkungsfaktoren, die kleiner gleich dem Nicht-Quantisierungsleistungsverstärkungsfaktor des E-DPDCH sind, Auswählen (102) eines Maximalwerts aus den Leistungsverstärkungsfaktoren kleiner gleich dem Nicht-Quantisierungsleistungsverstärkungsfaktor des E-DPDCH und Einstellen (102) des Maximalwerts als Quantisierungsleistungsverstärkungsfaktor des E-DPDCH, der durch den E-TFCI erforderlich ist; und
Durchführen (103) einer Quadratsumme an Quantisierungsleistungsverstärkungsfaktoren diverser E-DPDCHs, die durch den E-TFCI erforderlich sind, und Erhalten einer SG, die durch den E-TFCI erforderlich ist, die gleich der Quadratsumme an Leistungsverstärkungsfaktoren diverser E-DPDCHs ist, die durch den E-TFCI erforderlich sind.

2. Verfahren zum Bestimmen einer SG nach Anspruch 1, wobei der Schritt des Entscheidens, dass das UE eine neue Quantisierungstabelle von Δ_{E-DPDCH} verwendet oder nicht verwendet, umfasst:
Benachrichtigen des UE und eines Knotens B (NodeB) durch einen Radio Network Controller (RNC) gemäß einer Fähigkeit des UE in Bezug auf das Unterstützen der neuen Quantisierungstabelle von Δ_{E-DPDCH} über ein Entscheidungsergebnis, dass das UE die neue Quantisierungstabelle von Δ_{E-DPDCH} verwendet oder nicht.

3. Verfahren zum Bestimmen einer SG nach Anspruch 2, wobei der Schritt des Bestimmens der Fähigkeit des UE in Bezug auf das Unterstützen der neuen Quantisierungstabelle von Δ_{E-DPDCH} durch den RNC umfasst:
Berichten einer eigenen Versionsinformation durch das UE an den RNC und Lernen der Fähigkeit des UE in Bezug auf das Unterstützen der neuen Quantisierungstabelle von Δ_{E-DPDCH} gemäß der Versionsinformation durch den RNC; oder
neues Hinzufügen einer Zelle in eine Radio-Resource-Control-(RRC)-Verbindungsanfragenachricht und Benachrichtigen den RNC durch das UE über die Fähigkeit des UE in Bezug auf das Unterstützen der neuen Quantisierungstabelle von Δ_{E}-_{DPDCH} über die Zelle.

4. Verfahren zum Bestimmen einer SG nach Anspruch 2, wobei der Schritt des Benachrichtigens des UE und eines NodeB über ein Entscheidungsergebnis, dass das UE die neue Quantisierungstabelle von Δ_{E-DPDCH} verwendet oder nicht verwendet, umfasst:
Benachrichtigen des UE durch den RNC über eine neu hinzugefügte dedizierte Zelle auf einer Uu-Schnittstelle über ein Entscheidungsergebnis, dass das UE die neue Quantisierungstabelle von Δ_{E-DPDCH} verwendet oder nicht; und
Benachrichtigen des NodeB durch den RNC über eine neu hinzugefügte dedizierte Zelle auf einer lub-Schnittstelle über das Entscheidungsergebnis, dass das UE die neue Quantisierungstabelle von Δ_{E-DPDCH} verwendet oder nicht.

5. Benutzergerät (UE) zum Bestimmen einer Planungsgenehmigung (SG), das umfasst:
ein erstes Bestimmungsmodul, das so konfiguriert ist, dass es einen Nicht-Quantisierungsleistungsverstärkungsfaktors eines Enhanced Dedicated Channel (E-DCH) Dedicated Physical Data Channel (E-DPDCH), der durch einen E-DCH Transport Format Combination Indicator (E-TFCI) erforderlich ist, bestimmt (101);
ein Einstellmodul, das so konfiguriert ist, dass es eine neue Quantisierungstabelle von Δ_{E-DPDCH} durch Erweitern einer Quantisierungstabelle von Δ_{E-DPDCH} erstellt, wenn E-TFCI > E-TFCI-Boost, um eine Anpassung in einem Fall vorzunehmen, in dem ein UE den E-TFCI-Boost verwendet oder nicht; es eine Quantisierungstabelle von Δ_{E-DPDCH} auswählt, wenn E-TFCI ≤ E-TFCI-Boost, oder die Quantisierungstabelle von Δ_{E-DPDCH} auswählt, wenn E-TFCI > E-TFCI-Boost, wenn bestimmt wird, dass das UE die neue Quantisierungstabelle von Δ_{E-DPDCH} nicht verwendet; oder es die neue Quantisierungstabelle von Δ_{E-DPDCH} auswählt, wenn bestimmt wird, dass das UE die neue Quantisierungstabelle von Δ_{E-DPDCH} verwendet; wenn ein Verhältnis des Nicht-Quantisierungsleistungsverstärkungsfaktors des E-DPDCH zu einem Leistungsverstärkungsfaktor eines Dedicated Physical Control Channel (DPCCH) kleiner als ein quantisierter Mindestwert von Δ_{E-DPDCH} in einer ausgewählten Quantisierungstabelle von Δ_{E-DPDCH} ist, es den Nicht-Quantisierungsleistungsverstärkungsfaktors des E-DPDCH, der durch den E-TFCI erforderlich ist, als Leistungsverstärkungsfaktor eines E-DPDCH einstellt (102), der dem quantisierten Mindestwert von Δ_{E-DPDCH} entspricht; andernfalls es Leistungsverstärkungsfaktoren von E-DPDCHs bestimmt, die diversen quantisierten Werten von Δ_{E-DPDCH} in der ausgewählten Quantisierungstabelle von Δ_{E-DPDCH} entsprechen, es Leistungsverstärkungsfaktoren bestimmt, die kleiner gleich dem Nicht-Quantisierungsleistungsverstärkungsfaktor des E-DPDCH sind, es einen Maximalwert aus den Leistungsverstärkungsfaktoren kleiner gleich dem Nicht-Quantisierungsleistungsverstärkungsfaktor des E-DPDCH auswählt (102) und es den Maximalwert als Quantisierungsleistungsverstärkungsfaktor des E-DPDCH, der durch den E-TFCI erforderlich ist, einstellt (102); und
ein zweites Bestimmungsmodul, das so konfiguriert ist, dass es eine Quadratsumme an Quantisierungsleistungsverstärkungsfaktoren diverser E-DPDCHs, die durch den E-TFCI erforderlich sind, durchführt (103), und es eine SG erhält, die durch den E-TFCI erforderlich ist, die gleich der Quadratsumme an Leistungsverstärkungsfaktoren diverser E-DPDCHs ist, die durch den E-TFCI erforderlich sind.

## Revendications

1. Procédé de détermination d'un octroi de planification (SG), comprenant les étapes ci-dessous consistant à :
déterminer (101), par le biais d'un équipement d'utilisateur (UE), un facteur de gain de puissance de non quantification d'un canal de données physique dédié (E-DPDCH) de canal dédié amélioré (E-DCH) requis par un indicateur de combinaison de format de transport de canal E-DCH (E-TFCI);
générer, par le biais de l'équipement UE, une nouvelle table de quantification de Δ_{E-DPDCH} en développant une table de quantification de Δ_{E-DPDCH} lorsque E-TFCI > amplification E-TFCI, en tant qu'une adaptation à un cas où l'équipement UE utilise ou n'utilise pas l'amplification E-TFCI ;
sélectionner, par le biais de l'équipement UE, une table de quantification de Δ_{E-DPDCH} lorsque E-TFCI ≤ amplification E-TFCI, ou la table de quantification de Δ_{E-DPDCH} lorsque E-TFCI > amplification E-TFCI lorsqu'il est déterminé que l'équipement UE n'utilise pas la nouvelle table de quantification de Δ_{E-DPDCH} selon une capacité de l'équipement UE ; ou sélectionner, par le biais de l'équipement UE, la nouvelle table de quantification de Δ_{E-DPDCH} lorsqu'il est déterminée que l'équipement UE utilise la nouvelle table de quantification de Δ_{E-DPDCH} selon une capacité de l'équipement UE ;
lorsqu'un rapport entre le facteur de gain de puissance de non quantification du canal E-DPDCH et un facteur de gain de puissance d'un canal de commande physique dédié (DPCCH) est inférieur à une valeur quantifiée minimale de Δ_{E-DPDCH} dans une table de quantification sélectionnée de Δ_{E-DPDCH}, définir (102) le facteur de gain de puissance de quantification du canal E-DPDCH requis par l'indicateur E-TFCI, en tant qu'un facteur de gain de puissance d'un canal E-DPDCH correspondant à la valeur quantifiée minimale de Δ_{E-DPDCH} ; sinon, déterminer des facteurs de gain de puissance de canaux E-DPDCH correspondant à diverses valeurs quantifiées de Δ_{E-DPDCH} dans la table de quantification sélectionnée de Δ_{E-DPDCH}, déterminer des facteurs de gain de puissance qui sont inférieurs ou égaux au facteur de gain de puissance de non quantification du canal E-DPDCH, sélectionner (102) une valeur maximale à partir des facteurs de gain de puissance inférieurs ou égaux au facteur de gain de puissance de non quantification du canal E-DPDCH, et définir (102) la valeur maximale en tant que le facteur de gain de puissance de quantification du canal E-DPDCH requis par l'indicateur E-TFCI ; et
mettre en oeuvre (103), par le biais de l'équipement UE, une somme des carrés sur des facteurs de gain de puissance de quantification de divers canaux E-DPDCH requis par l'indicateur E-TFCI, et obtenir un octroi SG requis par l'indicateur E-TFCI qui est égal à la somme des carrés sur les facteurs de gain de puissance de divers canaux E-DPDCH requis par l'indicateur E-TFCI.

2. Procédé de détermination d'octroi SG selon la revendication 1, dans lequel l'étape consistant à déterminer que l'équipement UE utilise ou n'utilise pas une nouvelle table de quantification de Δ_{E-DPDCH} comprend l'étape ci-dessous consistant à :
notifier, par le biais d'un contrôleur de réseau radio (RNC), selon une capacité de l'équipement UE dans le cadre de la prise en charge de la nouvelle table de quantification de Δ_{E-DPDCH}, à l'équipement UE et à une station « Node B » (NodeB), un résultat de détermination indiquant si l'équipement UE utilise ou n'utilise pas la nouvelle table de quantification de Δ_{E-DPDCH}.

3. Procédé de détermination d'octroi SG selon la revendication 2, dans lequel l'étape consistant à déterminer, par le contrôleur RNC, la capacité de l'équipement UE dans le cadre de la prise en charge de la nouvelle table de quantification de Δ_{E-DPDCH}, comprend l'étape ci-dessous consistant à :
signaler, par le biais de l'équipement UE, ses propres informations de version au contrôleur RNC, et apprendre, par le biais du contrôleur RNC, la capacité de l'équipement UE dans le cadre de la prise en charge de la nouvelle table de quantification de Δ_{E-DPDCH} selon les informations de version ; ou
ajouter nouvellement une cellule dans un message de demande de connexion de gestion de ressources radio (RRC), et notifier, par le biais de l'équipement UE, au contrôleur RNC, la capacité de l'équipement UE dans le cadre de la prise en charge de la nouvelle table de quantification de Δ_{E-DPDCH}, par l'intermédiaire de la cellule.

4. Procédé de détermination d'octroi SG selon la revendication 2, dans lequel l'étape consistant à notifier, à l'équipement UE et à une station « Node B », un résultat de détermination indiquant si l'équipement UE utilise ou n'utilise pas la nouvelle table de quantification de Δ_{E-DPDCH} comprend les étapes ci-dessous consistant à :
notifier, par le biais du contrôleur RNC, par l'intermédiaire d'une cellule dédiée nouvellement ajoutée sur une interface Uu, à l'équipement UE, un résultat de détermination indiquant si l'équipement UE utilise ou n'utilise pas la nouvelle table de quantification de Δ_{E-DPDCH}; et
notifier, par le biais du contrôleur RNC, par l'intermédiaire d'une cellule dédiée nouvellement ajoutée sur une interface lub, à la station « Node B », le résultat de détermination indiquant si l'équipement UE utilise ou n'utilise pas la nouvelle table de quantification de Δ_{E-DPDCH}.

5. Équipement d'utilisateur (UE) destiné à déterminer un octroi de planification (SG), comprenant :
un premier module de détermination configuré de manière à déterminer (101) un facteur de gain de puissance de non quantification d'un canal de données physique dédié (E-DPDCH) de canal dédié amélioré (E-DCH) requis par un indicateur de combinaison de format de transport de canal E-DCH (E-TFCI);
un module de définition configuré de manière à générer une nouvelle table de quantification de Δ_{E-DPDCH} en développant une table de quantification de Δ_{E-DPDCH} lorsque E-TFCI > amplification E-TFCI, en tant qu'une adaptation à un cas où l'équipement UE utilise ou n'utilise pas l'amplification E-TFCI ; à sélectionner une table de quantification de Δ_{E-DPDCH} lorsque E-TFCI ≤ amplification E-TFCI, ou la table de quantification de Δ_{E-DPDCH} lorsque E-TFCI > amplification E-TFCI lorsqu'il est déterminé que l'équipement UE n'utilise pas la nouvelle table de quantification de Δ_{E-SPDCH}; ou à sélectionner la nouvelle table de quantification de Δ_{E-DPDCH} lorsqu'il est déterminée que l'équipement UE utilise la nouvelle table de quantification de Δ_{E-DPDCH} ; lorsqu'un rapport entre le facteur de gain de puissance de non quantification du canal E-DPDCH et un facteur de gain de puissance d'un canal de commande physique dédié (DPCCH) est inférieur à une valeur quantifiée minimale de Δ_{E-DPDCH} dans une table de quantification sélectionnée de Δ_{E-DPDCH}, à définir (102) le facteur de gain de puissance de quantification du canal E-DPDCH requis par l'indicateur E-TFCI, en tant qu'un facteur de gain de puissance d'un canal E-DPDCH correspondant à la valeur quantifiée minimale de Δ_{E-DPDCH} ; sinon, à déterminer des facteurs de gain de puissance de canaux E-DPDCH correspondant à diverses valeurs quantifiées de Δ_{E-DPDCH} dans la table de quantification sélectionnée de Δ_{E-DPDCH}, à déterminer des facteurs de gain de puissance qui sont inférieurs ou égaux au facteur de gain de puissance de non quantification du canal E-DPDCH, à sélectionner (102) une valeur maximale à partir des facteurs de gain de puissance inférieurs ou égaux au facteur de gain de puissance de non quantification du canal E-DPDCH, et à définir (102) la valeur maximale en tant que le facteur de gain de puissance de quantification du canal E-DPDCH requis par l'indicateur E-TFCI ; et
un second module de détermination configuré de manière à mettre en oeuvre (103) une somme des carrés sur des facteurs de gain de puissance de quantification de divers canaux E-DPDCH requis par l'indicateur E-TFCI, et à obtenir un octroi SG requis par l'indicateur E-TFCI qui est égal à la somme des carrés sur les facteurs de gain de puissance de divers canaux E-DPDCH requis par l'indicateur E-TFCI.
